# EUROPEAN PATENT SPECIFICATION

(11) **EP 2 245 077 B1**
(45) Date of publication and mention of the grant of the patent: **06.06.2018**
(21) Application number: 09703413.6
(22) Date of filing: 19.01.2009
(51) Int. Cl.: C08F 8/00, C08L 53/00

(54) **MONOFILAMENT FIBERS COMPRISING GROUND CALCIUM CARBONATE**
MONOFILAMENTFASERN MIT GEMAHLENEM CALCIUMCARBONAT
FIBRES MONOFILAMENT COMPRENANT DU CARBONATE DE CALCIUM BROYÉ

(30) Priority: 21.01.2008 US 22458; 31.03.2008 US 41237
(43) Date of publication of application: 03.11.2010
(73) Proprietor: Imerys Pigments, Inc., Roswell, GA 30076 (US)
(72) Inventor: MCAMISH, Larry, Marietta GA 30062 (US)
(74) Representative: Rushton, David John
(86) International application number: PCT/US2009/031397
(87) International publication number: WO 2009/094321

(56) References cited:
- EP-A1- 0 055 001
- WO-A1-97/39169
- WO-A1-2006/060825
- WO-A1-2007/124866
- WO-A2-2008/077156
- US-A- 5 427 595
- US-A1- 2007 026 244
- US-B2- 6 759 124
- US-B2- 7 270 723
- BARTCZAK Z ET AL: "Toughness mechanism in semi-crystalline polymer blends: II. High-density polyethylene toughened with calcium carbonate filler particles", POLYMER, ELSEVIER SCIENCE PUBLISHERS B.V, GB, vol. 40, no. 9, 1 April 1999 (1999-04-01), pages 2347-2365, XP004152637, ISSN: 0032-3861, DOI: DOI:10.1016/S0032-3861(98)00444-3
- RUIZ F A: "High Performance Mineral Reinforcement Concentrate for LLDPE & HMW-HDPE Blown Film Extrusion", JOURNAL OF PLASTIC FILM AND SHEETING, LANCASTER, PA, US, vol. 18, 1 January 2002 (2002-01-01), pages 25-29, XP003032641, ISSN: 8756-0879, DOI: 10.1106/875608702026263

## Description

### FIELD OF THE INVENTION

This application and the invention described herein generally discuss and relate to monofilament fibers comprising coated ground calcium carbonate.

### BACKGROUND OF THE INVENTION

Many commercial products are formed from components that may include monofilament fibers of polymeric resins. For instance, monofilament fibers may be used to make staple fibers, yarns, fishing line, woven fabrics, non-woven fabrics, artificial furs, diapers, feminine hygiene products, adult incontinence products, packaging materials, wipes, towels, industrial garments, medical drapes, medical gowns, foot covers, sterilization wraps, table cloths, paint brushes, napkins, trash bags, and various personal care articles.

Monofilament fibers are generally made by melt spinning, dry spinning, or wet spinning. In particular, monofilament fibers may be produced by spinning a polymeric resin into the shape of a fiber, for example, by heating the resin at least to its softening temperature and extruding the resin through a spinneret to form monofilament fibers. Monofilament fibers may also be produced by extruding the resin and attenuating the streams of resin by hot air to form fibers with a fine diameter.

The textile industry consumes a large amount of thermoplastic polymeric resin each year, about 300 million pounds of monofilament fiber. While it is known to incorporate various mineral fillers such as calcium carbonate and kaolin during production of non-woven products and plastic products such as films and molded parts, it is not currently the general practice to include large amounts of such fillers in monofilament fibers. Previously, the cost of virgin resin was lower than the cost of concentrates composed of resins and mineral fillers and, thus, no need existed for incorporating appreciable amounts of such fillers. However, increases in resin prices have created, in many instances, a cost benefit associated with increasing the quantity of mineral fillers and decreasing the quantity of resin in many products. By incorporating at least one mineral filler, for example, calcium carbonate, the required amount of virgin resin material decreases while the end product may have comparable quality in areas including but not limited to fiber strength, texture, and appearance.

Products comprising various amounts of inorganic compounds and/or mineral fillers have been known. For example, U.S. Patent No. 6,797,377 appears to disclose non-woven webs comprising from 0.1 to 10 wt% of at least one mineral filler such as calcium carbonate, but imposes the limitation of the filler being used in conjunction with titanium dioxide in a mixture of at least two resin polymers. U.S. Patent No. 6,759,357 likewise appears to disclose fabrics comprising from 0.0015 to 0.09 wt% of at least one inorganic compound. S. Nago and Y. Mizutani, Microporous Polypropylene Fibers Containing CaCO3 Filler, 62 J. Appl. Polymer Sci. 81-86 (1996), also appears to discuss polypropylene-based non-woven fibers comprising 25 wt% calcium carbonate. WO 97/30199 may disclose fibers consisting essentially of about 0.01 to about 20 wt% inorganic particles, substantially all having a Mohs hardness of less than about 5 and at least about 90 wt% of the inorganic particles having a particle size of less than about 10 microns. However, none of these references appear to disclose reducing the impact of the filler on the properties of the final monofilament fibers at least through changes to the particle size of the coated ground calcium carbonate by its average particle size and/or by its top cut. WO 2007/124866 describes monofilament fibers composed of 90 wt.-% polypropylene and 10 wt.-% ground calcium carbonate characterized by a top cut (defined as d98) of less than 10 microns.

A need exists for monofilament fibers comprising larger quantities of at least one filler, such as calcium carbonate, without a loss of desirable physical and/or chemical properties associated with monofilament fibers with lower quantities or no quantity of fillers. The present inventors have surprisingly and unexpectedly found that varying the particle size of the at least one filler, such as decreasing it below about 10 microns, allows the product fibers to retain desirable properties while increasing the overall quantity (measured as wt%) of filler.

### BRIEF DESCRIPTION OF THE FIGURES

Figure 1 is graph showing the maximum force applied to each monofilament fiber before the fiber would break ("max load") for each percentage of stearic acid coated ground calcium carbonate in the fiber.
Figure 2 is a graph showing the percent elongation of the monofilament fibers for each percentage of stearic acid coated ground calcium carbonate in the fiber.
Figure 3 is a graph showing the tenacity of the monofilament fibers for each percentage of stearic acid coated ground calcium carbonate in the fiber.

### SUMMARY OF THE INVENTION

The present invention is defined in and by the appended claims. This application generally discloses monofilament fibers comprising at least one polymeric resin and at least one coated ground calcium carbonate (GCC), preferably having an average particle size less than or equal to about 3 microns, wherein the at least one filler is present in the fibers in an amount of less than 10% by weight, relative to the total weight of the fibers. The monofilament fibers comprise at least one polymeric resin and at least one coated ground calcium carbonate, having a top cut of less than 10 microns, wherein the at least one filler is present in an amount of less than 10% by weight, relative to the total weight of the fibers.

Also disclosed herein is a method for producing monofilament fibers, comprising adding at least one filler to at least one polymeric resin and extruding the resulting mixture, wherein the at least one filler is present in the final product in an amount of less than 10% by weight. In one embodiment, the at least one filler has an average particle size of less than or equal to about 3 microns. The at least one filler has a top cut of less than 10 microns. The at least one filler comprises coated ground calcium carbonate.

### DETAILED DESCRIPTION OF THE INVENTION

### Monofilament Fibers

As used herein, the term "fiber" includes not only conventional single fibers and filaments, but also yarns made from a multiplicity of these fibers. In general, yarns are utilized in the manufacture of apparel, fabrics, and the like. Fibers and yarns, such as those described above, can be made into fabrics using any methods currently used or hereafter discovered for making fibers and yarns into fabrics, including but not limited to weaving and knitting. Fibers and yarns can also be made into non-woven fabrics using any methods currently used or hereafter discovered.

### Polymeric Resin

The monofilament fibers disclosed herein comprise at least one polymeric resin. The skilled artisan will readily understand appropriate polymeric resins for use in the described inventions. In one embodiment, the at least one polymeric resin is chosen from conventional polymeric resins that provide the properties desired for any particular yarn, woven product, non-woven product, or application. In another embodiment, the at least one polymeric resin is chosen from thermoplastic polymers, including but not limited to: polyolefins, such as polypropylene and polyethylene homopolymers and copolymers, including copolymers with 1-butene, 4-methyl-1-pentene, and 1-hexane; polyamides, such as nylon; polyesters; and copolymers of any of the above-mentioned polymers.

In one embodiment, the at least one polymeric resin is an isotropic semi-crystalline polymer. In one embodiment, the isotropic semi-crystalline polymer is melt-processable, melting in a temperature range that makes it possible to spin the polymer into fibers in the melt phase without significant decomposition. Exemplary isotropic semi-crystalline polymers include, but are not limited to, poly(alkylene terephthalates); poly(alkylene naphthalates); poly(arylene sulfides); aliphatic and aliphatic-aromatic polyamides; polyesters comprising monomer units derived from cyclohexanedimethanol and terephthalic acid; poly(ethylene terephthalate); poly(butylene terephthalate); poly(ethylene naphthalate); poly(phenylene sulfide); and poly(1,4-cyclohexanedimethanol terephthalate), wherein the 1,4-cyclohexanedimethanol is a mixture of *cis-* and *trans-* isomers, nylon-6, and nylon-66. In another embodiment, the at least one polymeric resin is a semi-crystalline polymer polyolefin, including but not limited to polyethylene and polypropylene. In a further embodiment, the at least one polymeric resin is extended chain polyethylene having a high tensile modulus, made by the gel spinning or the melt spinning of very or ultrahigh molecular weight polyethylene.

Isotropic polymers that cannot be processed in the melt may also be used as the at least one polymeric resin of the present inventions. In one embodiment, the isotropic polymer is rayon. In another embodiment, the isotropic polymer is cellulose acetate. In a further embodiment, the isotropic polymer is polybenzimidazole, poly[2,2'-(m-phenylene)-5,5'-bibenzimidazole]. In one embodiment, the isotropic polymers are dry spun using acetone as a solvent. In another embodiment, poly [2,2'-(m-phenylene)-5,5'-bibenzimidazole] is wet spun using N,N'-dimethylacetamide as a solvent. In yet another embodiment, the isotropic polymers are aromatic polyamides other than the polymer of terephthalic acid and p-phenylene diamine (e.g., polymers of terephthalic acid and one or more aromatic diamines) that are soluble in polar aprotic solvents, including but not limited to N-methylpyrrolidinone, that are wet spun with added particles to yield monofilament fibers. In a further embodiment, amorphous, non-crystalline, isotropic polymers, including but not limited to the copolymer of isophthalic acid, terephthalic acid and bisphenol A (polyarylate), may also be filled and utilized in the present inventions.

In another embodiment, the at least one polymeric resin is made from a liquid crystalline polymer (LCP). LCPs generally produce fibers with high tensile strength and/or modulus. In one embodiment, the liquid crystalline polymer is processable in the melt (i.e., thermotropic). In another embodiment, the liquid crystalline polymer cannot be processed in the melt. In a further embodiment, liquid crystalline polymers are used that exhibit liquid crystalline behavior in solution, are blended with a hard filler, and then wet or dry spun to yield monofilament fibers. In yet another embodiment, the aromatic polyamide made from p-phenylenediamine and terephthalic acid (including, but not limited to, polymers sold under the KEVLAR trademark) can be filled and wet spun (e.g., by dry-jet wet-spinning from a concentrated sulfuric acid solution) to yield monofilament fibers. In yet a further embodiment, the liquid crystalline polymer is any aromatic polyamide that is soluble in polar aprotic solvents, including but not limited to N-methylpyrrolidinone, and that can be spun into monofilament fibers. In still another embodiment, the liquid crystalline polymer is not liquid crystalline under some or all of a given condition or set of conditions, but still yields high modulus fibers. In still a further embodiment, the liquid crystalline polymer exhibits lyotropic liquid crystalline phases at some concentrations and in some solvents, but isotropic solutions at other concentrations and/or in other solvents.

In one embodiment, the liquid crystalline polymers (LCPs) for use in this invention are thermotropic LCPs. Exemplary thermotropic LCPs include, but are not limited to, aromatic polyesters, aliphatic-aromatic polyesters, aromatic poly(esteramides), aliphatic-aromatic poly(esteramides), aromatic poly(esterimides), aromatic poly(estercarbonates), aromatic polyamides, aliphatic-aromatic polyamides and poly(azomethines). In one embodiment, the thermotropic LCPs are aromatic polyesters and poly(esteramides) that form liquid crystalline melt phases at temperatures less than 360 °C and include one or more monomer units derived from the group consisting of terephthalic acid, isophthalic acid, 1,4-hydroquinone, resorcinol, 4,4'-dihydroxybiphenyl, 4,4'-biphenyldicarboxylic acid, 4-hydroxybenzoic acid, 6-hydroxy-2-naphthoic acid, 2,6-naphthalenedicarboxylic acid, 2,6-dihydroxynaphthalene, 4-aminophenol, and 4-aminobenzoic acid. In one embodiment the aromatic groups include substituents which do not react under the conditions of the polymerization, such as lower alkyl groups having 1-4 carbons, aromatic groups, F, Cl, Br, and I. The synthesis and structure of some typical aromatic polyesters are taught in U.S. Pat. Nos. 4,473,682; 4,522,974; 4,375,530; 4,318,841; 4,256,624; 4,161,470; 4,219,461; 4,083,829; 4,184,996; 4,279,803; 4,337,190; 4,355,134; 4,429,105; 4,393,191; and 4,421,908. The synthesis and structures of some typical aromatic poly(esteramides) are taught in U.S. Pat. Nos. 4,339,375; 4,355,132; 4,351,917; 4,330,457; 4,351,918; and 5,204,443. Potentially useful aromatic liquid crystalline polyesters and poly(esteramides) may be those available from Hoechst Celanese Corporation under the VECTRA trademark, as well as from other manufacturers.

In yet another embodiment, the LCPs have monomer repeat units derived from 4-hydroxybenzoic acid and 6-hydroxy-2-naphthoic acid, as taught in U.S. Pat. No. 4,161,470. In one embodiment, the monomer units derived from 4-hydroxybenzoic acid comprise 15% to 85% of the polymer on a mole basis, and monomer units derived from 6-hydroxy-2-naphthoic acid comprise 85% to 15% of the polymer on a mole basis. In another embodiment, the polymer comprises about 73% monomer units derived from 4-hydroxybenzoic acid and about 27% monomer units derived from 6-hydroxy-2-naphthoic acid, on a mole basis. Such a polymer is available in fiber form under the VECTRAN trademark from Hoechst Celanese Corporation, Charlotte, N.C.

In still a further embodiment, the LCPs or poly(esteramides) comprise the above recited monomer units derived from 6-hydroxy-2-naphthoic acid and 4-hydroxybenzoic acid, as well as monomer units derived from one or more of the following monomers: 4,4'-dihydroxybiphenyl, terephthalic acid, and 4-aminophenol. In yet another embodiment, the polyester comprising these monomer units is derived from 4-hydroxybenzoic acid, 6-hydroxy-2-naphthoic acid, 4,4'-biphenol, and terephthalic acid, as taught in U.S. Pat. No. 4,473,682, with the polymer comprising these monomer units in a mole ratio of about 60:4:18:18. In another embodiment, the poly(esteramide) comprises monomer units derived from 4-hydroxybenzoic acid, 6-hydroxy-2-naphthoic acid, terephthalic acid, 4,4'-biphenol, and 4-aminophenol, as taught in U.S. Pat. No. 5,204,443. In yet another embodiment, the composition comprises these monomer units in a mole ratio of about 60:3.5:18.25:13.25:5.

In one embodiment, the at least one polymeric resin is a suitable commercial polymeric resin product. Exemplary commercial products suitable as the at least one polymeric resin include, but are not limited to: Basell Pro-fax 6323 polypropylene resin, a general purpose homopolymer with a density of about 0.9 g/cm³ and a melt flow index of about 12.0 g/10 min, available from LyondellBasell Industries; Exxon 3155, a polypropylene homopolymer having a melt flow rate of about 30 g/10 min, available from Exxon Mobil Corporation; PF 305, a polypropylene homopolymer having a melt flow rate of about 38 g/10 min, available from Montell USA; ESD47, a polypropylene homopolymer having a melt flow rate of about 38 g/10 min, available from Union Carbide; and 6D43, a polypropylene-polyethylene copolymer having a melt flow rate of about 35 g/10 min, available from Union Carbide.

The at least one polymeric resin may be present in the monofilament fibers of the present disclosure in an amount of greater than or equal to 50 wt%, relative to the total weight of the fibers. In one embodiment, the at least one polymeric resin is present in the fibers in an amount ranging from 50 to 90 wt%. In another embodiment, the at least one polymeric resin is present in the fibers in an amount ranging from 75 to 90 wt%.

### Filler

The monofilament fibers comprise at least one filler. The skilled artisan will readily understand appropriate fillers for use in the inventions described herein. In one embodiment, the at least one filler may be a mineral-based substrate capable of being coated, mixed with at least one polymeric resin, and extruded. In another embodiment, the at least one filler is coated ground calcium carbonate. Coated ground calcium carbonate is a filler commonly used in the formation of various polymeric products. In a further embodiment, the at least one filler is chosen from the group consisting of coated ground calcium carbonate, limestone, talc, and clay products.

Exemplary coated ground calcium carbonate products suitable for use as an at least one filler include, but are not limited to, those commercially available. In one embodiment, the coated ground calcium carbonate is chosen from those products sold under the name FiberLink™ by Imerys, Inc. In another embodiment, the coated ground calcium carbonate is the product sold under the name MAGNUM GLOSS® by the Mississippi Lime Company. In a further embodiment, the coated ground calcium carbonate is the product sold under the name ALBAGLOS® by Specialty Minerals, Inc. In yet another embodiment, the coated ground calcium carbonate is the product sold under the name OMYACARB® by OMYA, Inc. In yet a further embodiment, the coated ground calcium carbonate is the product sold under the name HUBERCARB® by Huber, Inc. In still another embodiment, the coated ground calcium carbonate is the product sold under the name FiberLink™ 101S by Imerys, Inc. Exemplary commercially available coated ground calcium carbonate products may be available in the form of dry powders having defined particle size ranges; however, not all commercial coated ground calcium carbonate products will exhibit a particle size and distribution appropriate for use in accordance with the present disclosure.

The particle size of the at least one filler may affect, among other things, the maximum amount of filler effectively incorporated into the monofilament fibers disclosed herein, as well as the aesthetic properties and strength of the resulting products. In one embodiment, the at least one filler has an average particle size less than 10 microns. In another embodiment, the at least one filler has an average particle size ranging from 1 micron to less than 10 microns.
In a further embodiment, the at least one filler has an average particle size of about 1 micron. In yet another embodiment, the at least one filler has an average particle size less than or equal to 4 microns. In yet a further embodiment, the at least one filler has an average particle size less than or equal to 3 microns. In still another embodiment, the at least one filler has an average particle size less than or equal to 2 microns. In still a further embodiment, the at least one filler has an average particle size less than or equal to 1.5 microns. In another embodiment, the at least one filler has an average particle size less than or equal to 1 micron. In a further embodiment, the at least one filler has an average particle size ranging from 1 micron to 4 microns. In yet another embodiment, the at least one filler has an average particle size ranging from 1 micron to 3 microns. In yet a further embodiment, the at least one filler has an average particle size ranging from 1 micron to 2 microns. In still another embodiment, the at least one filler has an average particle size ranging from 0.5 microns to 1.5 microns. Average particle size is defined herein as the d₅₀ as measured on a Microtrac® 100 particle size analyzer.

The at least one filler is characterized by its "top cut" value. As used herein, "top cut" refers to the largest particle size that can be identified in a sample of filler by a Microtrac® 100 particle size analyzer. The top cut is less than 10 microns. In a further embodiment, the top cut is less than 8 microns. In yet another embodiment, the top cut is less than 6 microns. In yet a further embodiment, the top cut is less than 4 microns. In still another embodiment, the top cut ranges from 4 microns to less than 10 microns. In a further embodiment, the top cut ranges from 4 microns to 8 microns. In yet another embodiment, the top cut ranges from 4 microns to 6 microns. In still another embodiment, the top cut is less than the diameter of the monofilament fibers.

The particle size distribution of the at least one filler according to the present disclosure may be small enough so as to not significantly weaken the individual fibers and/or make the surface of the fibers abrasive, but large enough so as to create an aesthetically pleasing surface texture. In one embodiment, the particle size distribution of the at least one filler has less than 5% of the total particles greater than 10 microns, and less than 5% of the total particles less than 0.5 microns. Particles above 10 microns may tend to weaken the structure, and particles less than 0.5 microns may tend to form agglomerates, leading to formation of structures greater than 10 microns.

The at least one filler is coated with at least one organic material chosen from fatty acids, including but not limited to stearic acid, and salts and esters thereof, such as stearate. In another embodiment, the at least one organic material is ammonium stearate. In a further embodiment, the at least one organic material is calcium stearate. The products sold under the tradename FiberLink™ by Imerys, Inc., are non-limiting examples of ground calcium carbonate products coated with stearic acid.

Surface coating the at least one filler with at least one organic material may, in some embodiments, serve to improve dispersion of the at least one filler particles throughout the fiber and/or facilitate the overall production of the fibers. For example, the addition of uncoated ground calcium carbonate to at least one polymeric resin, as opposed to coated ground calcium carbonate, results in fibers having uncoated ground calcium carbonate particles located on the outside of the fibers, which may be problematic because uncoated particles located on the outside of the fibers may cause inorganic deposits to attach to metal components of the spinneret die holes and clog the exit holes, thus preventing the fibers from extruding properly.

The amount of the at least one filler may negatively impact the strength and/or surface texture of the monofilaments fibers if it exceeds a certain value. The at least one filler is present in an amount less than 10 wt%, relative to the total weight of the fibers. In another embodiment, the at least one filler is present in an amount ranging from 5 wt% to less than 10 wt%.

### Optional Additives

In addition to the at least one polymeric resin and the at least one filler, the monofilament fibers may further comprise at least one additive. The at least one additive may be chosen from those now known in the art or those hereafter discovered. In one embodiment, the at least one additive is chosen from additional mineral fillers, including but not limited to, talc, gypsum, diatomaceous earth, kaolin, attapulgite, bentonite, montmorillonite, and other natural or synthetic clays. In another embodiment, the at least one additive is chosen from inorganic compounds, including but not limited to silica, alumina, magnesium oxide, zinc oxide, calcium oxide, and barium sulfate. In a further embodiment, the at least one additive is chosen from one of the group consisting of: optical brighteners; heat stabilizers; antioxidants; antistatic agents; anti-blocking agents; dyestuffs; pigments, including but not limited to titanium dioxide; luster improving agents; surfactants; natural oils; and synthetic oils.

### Processes for Producing Monofilament Fibers

Monofilament fibers, as discussed herein, may be produced according to any appropriate process or processes now known to the skilled artisan that result in the production of a continuous monofilament fiber comprising at least one polymeric resin and at least one filler. Exemplary techniques include, but are not limited to, dry spinning, wet spinning, spun-bonding, flash-spinning, needle-punching, meltblowing, and water-punching processes. One particular exemplary process for producing monofilament fibers is melt spinning, which may employ an extrusion process to provide molten polymer mixtures to spinneret dies. In one embodiment, melt spinning may be accomplished using DuPont fiber spinning equipment, such as that available at the time this application was filed at Clemson University in Clemson, South Carolina, USA.

In one embodiment, the process for producing monofilament fibers according to the present invention comprises heating the at least one polymeric resin to at least its softening point. In another embodiment, the process comprises heating the at least one polymeric resin to any temperature suitable for the extrusion of the at least one polymeric resin. In a further embodiment, the at least one polymeric resin is heated to a temperature ranging from 225 °C to 260 °C.

The at least one filler may be incorporated into the at least one polymeric resin using any method conventionally known in the art. For example, the at least one filler may be added to the at least one polymeric resin during any step prior to extrusion, for example, during or prior to the heating step. In another embodiment, a "masterbatch" of at least one polymeric resin and the at least one filler may be premixed, optionally formed into granulates or pellets, and mixed with at least one additional virgin polymeric resin before extrusion of the fibers. The at least one additional virgin polymeric resin may be the same or different from the at least one polymeric resin used to make the masterbatch. In certain embodiments, the masterbatch comprises a higher concentration of the at least one filler, for instance, a concentration ranging from 20 wt% to 75 wt%, than is desired in the final product, and may be mixed with the at least one additional polymeric resin in an amount suitable to obtain the desired concentration of at least one filler in the final monofilament fiber product. In one embodiment, the concentration of the at least one filler in the masterbatch is 20 wt% to 75 wt%. In another embodiment, the concentration is 20 wt% to 50 wt%. For example, a masterbatch comprising 50 wt% coated ground calcium carbonate may be mixed with an equal amount of at least one virgin polymeric resin to produce a final product comprising 25 wt% coated ground calcium carbonate. The masterbatch may be mixed and pelletized using any apparatus known in the art or hereafter discovered, for example, a ZSK 30 Twin Extruder may be used to mix and extrude the coated ground calcium carbonate and at least one polymer resin masterbatch, and a Cumberland pelletizer may be used to optionally form the masterbatch into pellets.

Once the at least one filler or masterbatch is mixed with the at least one polymeric resin, the mixture may be extruded continuously through at least one spinneret to produce long filaments. The extrusion rate may vary according to the desired application, and appropriate extrusion rates will be known to the skilled artisan.

The extrusion temperature may also vary depending on the desired application and process. In one embodiment, the extrusion temperature ranges from 225 °C to 260 °C. In another embodiment, the extrusion temperature ranges from 235 °C to 245 °C. The extrusion apparatus may be chosen from those conventionally used now. In one embodiment, the extrusion apparatus is an Alex James 0.75 inch (1.9 cm) single screw extruder with a 0.297 cc/rev metering pump. The at least one spinneret may be chosen from those conventionally used now. In one embodiment, the at least one spinneret contains 10 holes, each about 0.022 inches (0.56 mm) in diameter.

After extrusion, the monofilament fibers may be attenuated. In one embodiment, the fibers are attenuated by high-speed drawing, in which the multi-strand filament is drawn out on rollers such that the wind speed is about 1000 meters per minute.

The monofilament fibers may be produced to have a desired size. Those of ordinary skill in the art will know appropriate sizes of the monofilament fibers for the desired or intended application, and processes for measuring them. The monofilament fibers range in size from 0.5 to 5 denier.

### Testing

The fibers disclosed herein may be tested by any number of various methods and for any number of various properties, including for their individual fiber strength, elongation at break, and tenacity. Those three tests may be conducted using, for example, ASTM D3822.

Each numerical parameter should be construed in light of the number of significant digits and ordinary rounding approaches.

Notwithstanding that the numerical ranges and parameters setting forth the broad scope of the invention are approximations, unless otherwise indicated the numerical values set forth in the specific examples are reported as precisely as possible. Any numerical value, however, inherently contains certain errors resulting from the standard deviation found in the respective testing measurements.

The headers used in this specification are presented for the convenience of the reader and not intended to limit the inventions described herein. By way of non-limiting illustration, examples of certain embodiments of the present disclosure are given below.

### EXAMPLES

### Example 1 (for comparison)

The at least one filler in this Example was a low solids processed, uncoated ground calcium carbonate (Supermite®, Imerys, Inc.) with an average particle size of about 1.5 microns and a top cut of about 10 microns. The filler was compounded at various weight percentages with Basell Profax 6323 polypropylene resin, a general purpose homopolymer with a density of 0.9 g/cm³ and a melt flow index of 12.0 g/10 min. Monofilament fibers were produced, when possible, using a standard melt fiber spinning process.

At 5% loadings, the uncoated product experienced immediate processing problems where even 4 denier fibers could not be produced, even at low line speeds, without fiber breaks. This trial was not conducted long enough for the powder to plate out and clog the spinneret holes, but previous evaluations indicate it would have happened.

### Example 2

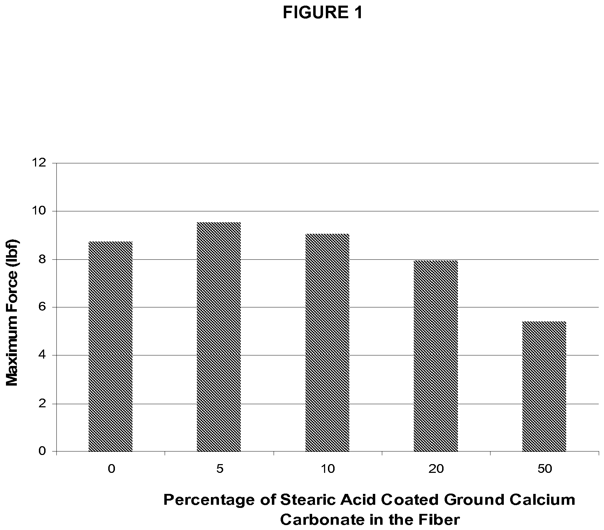

This example used as the at least one filler a low solids processed, stearic acid coated calcium carbonate with an average particle size of 1.5 micron and a top cut of 8 microns, sold by Imerys, Inc. under the trade name FiberLink™ 101S. The stearic acid target was about 1% by weight. The virgin resin was a 12 MFI homopolymer polypropylene supplied by Atofina. Tests of the resulting fibers were conducted using ASTM D3822y conditions at additive loadings of about 0%, about 5% (according to the invention), about 10%, about 20%, and about 50%. Continuous fibers were produced at target sizes of 4, 3, and 2 denier, using the same standard melt fiber spinning process as in Example 1. Prototypes containing about 50% additive loadings could not be produced at 2 denier. The strength properties of 3 denier monofilament fibers are shown in Figures 1, 2, and 3 and summarized below in Table 1.

**Table 1**

| **Coated Ground Calcium Carbonate in the Fiber (%)** | **Maximum Load (lb_{f})** | **Elongation at Break (%)** | **Tenacity (g/den)** |
|---|---|---|---|
| **0 %** | 8.74 | 370 | 2.91 |
| **5 %** | 9.55 | 352 | 3.18 |
| **10 %** | 9.04 | 308 | 3.01 |
| **20 %** | 7.96 | 188 | 2.65 |
| **50 %** | 5.40 | 127 | 1.80 |

The individual fiber strength (maximum load) shown in Table 1 and Figure 1 was reasonably level for percentages of stearic acid coated ground calcium carbonate in the fiber up to about 20%. The results at 50% were lower, but the 3 denier fibers could still be produced at over 1000 meters per minute.

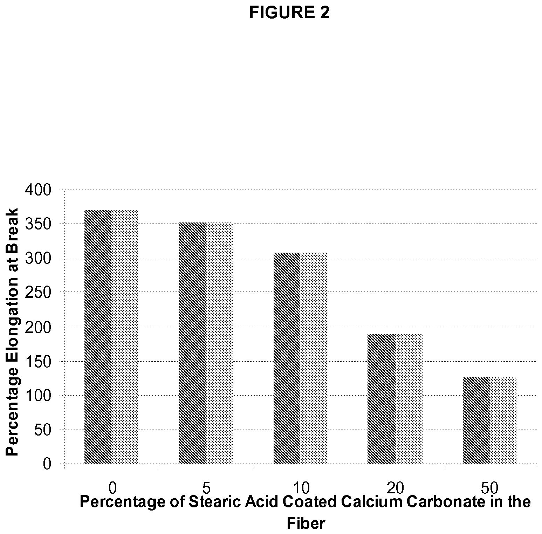

When measuring the elongation at the break for the individual fibers, the cold fibers were stretched and the results are shown in Table 1 and Figure 2. For 3 denier fibers, a sharp decrease elongation at break occurred between about 10% and about 20% of stearic acid coated ground calcium carbonate in the fibers.

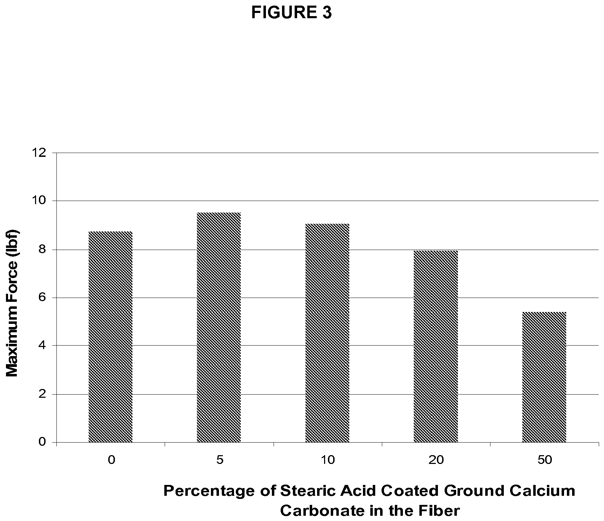

The individual fiber tenacity shown in Table 1 and Figure 3 was reasonably consistent over the range of about 0% to about 20% of stearic acid coated ground calcium carbonate in the fiber.

Results with 2 and 4 denier fibers illustrated similar trends that were overall not inconsistent with those of Table 1 and Figure 1-3.

## Claims

1. A monofilament fiber comprising at least one polymeric resin and at least one coated filler having a top cut of less than 10 microns, wherein the at least one coated filler comprises at least one ground calcium carbonate and at least one coating, and wherein the at least one coated filler is present in the fiber in an amount less than 10 wt%, relative to the total weight of the monofilament fiber and wherein the at least one coating is at least one organic material chosen from fatty acids and salts and esters thereof and the top cut is the largest particle size that can be identified in the filler by a Microtrac® 100 particle size analyzer and wherein the monofilament fiber has a size ranging from 0.5 to 5 denier.

2. The monofilament fiber of claim 1, wherein the at least one organic material is chosen from stearic acid, ammonium stearate, and calcium stearate.

3. The monofilament fiber of any one of claims 1 to 2, wherein the at least one polymeric resin is at least one thermoplastic polymer.

4. The monofilament fiber of claim 3, wherein the at least one thermoplastic polymer is chosen from the group consisting of polyolefins, polyamides, polyesters, copolymers thereof, and blends thereof.

5. The monofilament fiber of claim 4, wherein the polyolefins are chosen from polypropylene and polyethylene homopolymers and copolymers.

6. The monofilament fiber of any one of claims 1 to 5, further comprising at least one additive chosen from additional mineral fillers, inorganic compounds, waxes, optical brighteners, heat stabilizers, antioxidants, anti-static agents, anti-blocking agents, dyestuffs, pigments, luster improving agents, surfactants, natural oils, and synthetic oils.

7. The monofilament fiber of any one of claims 1 to 6, wherein the at least one ground calcium carbonate has a top cut ranging from 4 microns to 8 microns.

8. The monofilament fiber of any one of claims 1 to 7, wherein the at least one ground calcium carbonate has an average particle size of less than or equal to 3 microns wherein the average particle size is the d50 as measured on a Microtrac® 100 particle size analyzer.

9. The monofilament fiber of any one of claims 1 to 7, wherein the at least one ground calcium carbonate has an average particle size ranging from 1 micron to 3 microns.

10. The monofilament fiber of any one of claims 1 to 7, wherein the at least one ground calcium carbonate has an average particle size ranging from 0.5 micron to 2 microns.

## Patentansprüche

1. Monofilamentfaser, umfassend mindestens ein Polymerharz und mindestens einen beschichteten Füllstoff mit einer Höhensperre von unter 10 µm, wobei mindestens ein beschichteter Füllstoff mindestens ein gemahlenes Calciumcarbonat und mindestens eine Beschichtung umfasst, wobei in der Faser, bezogen auf das Gesamtgewicht, mindestens ein beschichteter Füllstoff zu weniger als 10 Gewichtsprozent der Monofilamentfaser vorhanden ist und wobei mindestens eine Beschichtung aus mindestens einem organischen Material besteht, das entweder eine Fettsäure, ein Salz oder deren Ester ist, und wobei die Höhensperre die größte Partikelgröße darstellt, die durch den Teilchengrößenanalysator Microtrac® 100 im Füllstoff identifiziert werden kann und wobei die Monofilamentfaser eine Größe von 0,5 bis 5 Denier aufweist.

2. Monofilamentfaser gemäß Anspruch 1, wobei das organische Material entweder Stearinsäure, Ammoniumstearat oder Calciumstearat ist.

3. Monofilamentfaser gemäß einem der Ansprüche 1 bis 2, wobei mindestens ein Polymerharz ein thermoplastisches Polymer ist.

4. Monofilamentfaser gemäß Anspruch 3, wobei mindestens ein thermoplastisches Polymer aus Polyolefinen, Polyamiden, Polyestern, deren Copolymeren oder Mischungen besteht.

5. Monofilamentfaser gemäß Anspruch 4, wobei die Polyolefine aus Polypropylen und homopolymeren und copolymeren Polyethylen bestehen.

6. Monofilamentfaser gemäß einem der Ansprüche 1 bis 5, ferner umfassend mindestens einen Zusatzstoff, der aus zusätzlichen mineralischen Füllstoffen besteht, bei denen es sich um anorganische Verbindungen, Wachse, optische Aufheller, Wärmestabilisatoren, Antioxidantien, Antistatika, Antiblockiermittel, Farbstoffe Pigmente, Glanzverbesserer, oberflächenaktive Mittel, natürliche Öle und synthetische Öle handelt.

7. Monofilamentfaser gemäß einem der Ansprüche 1 bis 6, wobei mindestens ein gemahlenes Calciumcarbonat eine Höhensperre von 4 bis 8 µm aufweist.

8. Monofilamentfaser gemäß einem der Ansprüche 1 bis 7, wobei mindestens ein gemahlenes Calciumcarbonat eine durchschnittliche Partikelgröße von weniger als oder gleich 3 µm aufweist, wobei die durchschnittliche Partikelgröße die an einem Teilchengrößenanalysator Microtrac® 100 gemessene d50 ist.

9. Monofilamentfaser gemäß einem der Ansprüche 1 bis 7, wobei mindestens ein gemahlenes Calciumcarbonat eine durchschnittliche Partikelgröße von 1 bis 3 µm aufweist.

10. Monofilamentfaser gemäß einem der Ansprüche 1 bis 7, wobei mindestens ein gemahlenes Calciumcarbonat eine durchschnittliche Partikelgröße von 0.5 bis 2 µm aufweist.

## Revendications

1. Une fibre monofilamentaire comprenant au moins une résine polymère et au moins une charge enrobée ayant une coupe supérieure de moins de 10 microns, dans laquelle au moins une charge enrobée comprend au moins un carbonate de calcium naturel et au moins un revêtement, et dans lequel au moins une charge enrobée est présente dans la fibre en une quantité inférieure à 10 % en poids par rapport au poids total de la fibre monofilamentaire et dans laquelle au moins un revêtement est au moins un matériau organique choisi parmi les acides gras et leurs sels et esters et la coupe supérieure est la plus grande taille de particule qui peut être identifiée dans la charge par un analyseur de taille de 100 particules Microtrac® et dans laquelle la fibre monofilamentaire a une taille allant de 0,5 à 5 deniers.

2. La fibre monoflamentaire selon la revendication 1, dans laquelle au moins une matière organique est choisie parmi l'acide stéarique, le stéarate d'ammonium et le stéarate de calcium.

3. La fibre monofilamentaire selon l'une quelconque des revendications 1 à 2, dans laquelle au moins une résine polymère est au moins un polymère thermoplastique.

4. La fibre monofilamentaire selon la revendication 3, dans laquelle au moins un polymère thermoplastique est choisi dans le groupe constitué de polyoléfines, de polyamides, de polyesters, leurs copolymères et leurs mélanges.

5. La fibre monofilamentaire selon la revendication 4, dans laquelle les polyoléfines sont choisies parmi les homopolymères et les copolymères de polypropylène et de polyéthylène.

6. La fibre monofilamentaire selon l'une quelconque des revendications 1 à 5, comprenant en outre au moins un additif choisi parmi les charges minérales additionnelles, les composés inorganiques, les cires, les azurants optiques, les stabilisants thermiques, les antioxydants, les agents antistatiques, les agents anti-bloquants, les colorants, les pigments, les agents améliorant l'éclat, les tensioactifs, les huiles naturelles et les huiles synthétiques.

7. La fibre monofilamentaire selon l'une quelconque des revendications 1 à 6, dans laquelle au moins un carbonate de calcium naturel a une coupe supérieure allant de 4 microns à 8 microns.

8. La fibre monofilamentaire selon l'une quelconque des revendications 1 à 7, dans laquelle au moins un carbonate de calcium naturel a une taille moyenne de particule inférieure ou égale à 3 microns, dans laquelle la taille moyenne des particules étant la d50 mesurée sur un analyseur de taille de 100 particules Microtrac®.

9. La fibre monofilamentaire selon l'une quelconque des revendications 1 à 7, dans laquelle au moins un carbonate de calcium naturel a une taille de particule moyenne allant de 1 micron à 3 microns.

10. La fibre monofilamentaire selon l'une quelconque des revendications 1 à 7, dans laquelle au moins un carbonate de calcium naturel a une taille de particule moyenne allant de 0,5 micron à 2 microns.
